# EUROPEAN PATENT APPLICATION

(11) **EP 4 628 434 A1**
(43) Date of publication of application: **08.10.2025**
(21) Application number: 24168453.9
(22) Date of filing: 04.04.2024
(51) Int. Cl.: B65G 47/52, B65G 54/02

(54) **PICK AND PLACE SYSTEM FOR LOGISTICS APPLICATIONS**

(71) Applicant: ABB Schweiz AG, 5400 Baden (CH)
(72) Inventor: STACEY, DERRICK, Atlanta, GA 30307 (US); ROVELLI, DARIO, 24030 Valbrembo (IT)
(74) Representative: Patentanwälte Pinter & Weiss OG

(57) **Abstract**

To provide an improved pick and place system (1), wherein the required pick and place distance and the size of the manipulator (2) is minimized and operation speed of the pick and place system (1) is increased, the outfeed conveyor (4) is designed as planar motor (8), wherein the outfeed planar motor (48) is designed to synchronize the movement of the shuttle (10) of the outfeed planar motor (48) in the transfer zone (5) to an infeed movement trajectory (Ti) of the at least one product (6) in the transfer zone (5) at least when the manipulator (2) picks the at least one product (6) off the infeed conveyor (3), or that the infeed conveyor (3) is designed as planar motor (8), wherein the infeed planar motor (38) is designed to synchronize the movement of the shuttle (10) of the infeed planar motor (38) in the transfer zone (5) to an outfeed movement trajectory (To) of the at least one product (6) in the transfer zone (5) at least when the manipulator (2) picks the at least one product (6) off the shuttle (10) of the infeed planar motor (38).

## Description

### Technical Field of the invention

The present invention pertains to a pick and place system for transferring products, comprising: a manipulator, an infeed conveyor and an outfeed conveyor, wherein at least the infeed conveyor or the outfeed conveyor is designed as a planar motor comprising at least one shuttle, which at least one shuttle is moveable in a transfer zone of the pick and place system, wherein when the pick and place system is used, at least one product is arranged on the infeed conveyor and the at least one product is conveyed by the infeed conveyor into the transfer zone, wherein the manipulator is moveable in the area of the transfer zone and the manipulator is provided to pick the at least one product off the infeed conveyor, to move the at least one product to the outfeed conveyor and to place the at least one product onto the outfeed conveyor during a transfer time when the pick and place system is used. The invention also pertains to a method for operating a pick and place system for transferring products.

### Description of the Prior Art

Rapid growth in product processing industries, like food and beverage, call for more efficient and flexible product handling systems to increase product flow and minimizing manual labor. To satisfy the needs of those industries, so-called pick and place systems are widely used, which are automated systems for handling products during different processing steps, like sorting or packaging of products.

Pick and place systems basically comprise a manipulator (e.g., a robot, robotic arm or a delta robot with a gripper) and a number of conveyors (e.g., belt conveyors), which are designed to convey certain products (e.g., pieces of food, packages, etc.). The manipulator is arranged in the area of the conveyors and is used to transfer products from one conveyor to another conveyor, for example, from an infeed conveyor to an outfeed conveyor. Therefore, the manipulator picks off a product from one conveyor and places the picked-off product onto another conveyor, e.g., in a sorted manner. The product must not be conveyed directly on the conveyor but the product could also be picked from a given receptacle on the conveyor, for example a container or a box. Likewise, placing must not be directly onto the conveyor but the product could be placed into given receptables on the conveyor.

To optimize the efficiency of pick and place systems, sophisticated pick strategies are used to allow multiple manipulators to work with minimal overlap to maximize pick range and minimize missed products, for example, as they are randomly presented on the conveyors.

Depending on the volume of the product flow as well as the size of the products, the conveyors and thus the workspaces of the manipulators can be quite large.

The main drawback of current state of the art pick and place systems is to manage trade-offs between size and number of manipulators. For a high volume of smaller products, an increase in the number of manipulators is needed to ensure a certain operation speed of the pick and place system. As a result, the complexity of the pick strategy increases, which induces higher automation costs.

For heavier products larger manipulators are needed, which increase the cost of the pick and place system due to enlarged arm linkage size, gearbox size and motor size of the manipulators. This increase in size also impacts the operation speed of the manipulators itself due to higher inertia that needs to be moved, especially when pick and place distances for the manipulators are quite far.

In recent years the development of planar transportation technology, like planar motors, has enabled more flexibility and more complex movement profiles in logistics applications. Besides horizontal usage of planar motors, there are also arrangements known for vertical and overhead operation, which enables even more flexibility. Planar motors are well known in prior art. US 9,202,719 B2, for example, discloses the basic structure and the mode of operation of a planar motor. Basically, a planar motor has a stator which forms a movement plane above an active surface of the stator. One or more movable devices, so-called shuttles, can be moved mainly in two dimensions in the movement plane formed by the stator, whilst levitating above the active surface of the stator. With the aid of such planar motors, high-precision movements of the levitating shuttles can be carried out in the direction of all six rigid body degrees of freedom.

In US 10,173,848 B2 a planar motor with a number of shuttles is used for transferring products between transportation systems, e.g., belt conveyors, without the use of a manipulator. Therein, a belt conveyor is arranged between the active surface of the stator and the number of shuttles of the planar motor. This arrangement enables movement of the shuttles above the belt conveyor, which can then shove the products conveyed on the belt conveyor.

### Summary of the Invention

It is an object of the present invention to provide an improved pick and place system, wherein the required pick and place distance and the size of the manipulator is minimized and operation speed of the pick and place system is increased.

This object is achieved with the features of the independent claims. The invention proposes a pick and place system comprising at least one planar motor.

The outfeed conveyor is designed as planar motor, wherein when the pick and place system is used, the at least one product is conveyed on the infeed conveyor into the transfer zone with a given infeed movement trajectory and the shuttle of the outfeed planar motor is moved in the transfer zone in the region of the at least one product on the infeed conveyor, wherein the outfeed planar motor is designed to synchronize the movement of the shuttle of the outfeed planar motor in the transfer zone to the infeed movement trajectory of the at least one product in the transfer zone at least when the manipulator picks the at least one product off the infeed conveyor. Due to the movement synchronization of the shuttle of the outfeed planar motor and the at least one product on the infeed conveyor in the transfer zone, the complexity of the movement of the manipulator necessary to transfer the product to the outfeed conveyor can be significantly decreased. Furthermore, by moving the shuttle in the region of the at least one product on the infeed conveyor, the pick and place distance for the manipulator is minimized. This leads to a cascading effect, since due to the minimized pick and place distance, the size of the manipulator can be reduced and the operation speed of the pick and place system can be increased. In this way the transfer time for the manipulator to transfer the at least one product from the infeed conveyor onto outfeed conveyor is decreased as well.

Alternatively, the infeed conveyor is designed as planar motor and the shuttle of the infeed planar motor is designed to convey the at least one product into the transfer zone, wherein when the pick and place system is used, the at least one product is conveyed by the outfeed conveyor out of the transfer zone with a given outfeed movement trajectory after being placed onto the outfeed conveyor by the manipulator, wherein the infeed planar motor is designed to synchronize the movement of the shuttle of the infeed planar motor in the transfer zone to the outfeed movement trajectory of the at least one product in the transfer zone at least when the manipulator picks the at least one product off the shuttle of the infeed planar motor. Also in this embodiment, the pick and place distance for the manipulator can be minimized, the size of the manipulator can be reduced and the operation speed of the pick and place system can be increased. Due to the fact, that either the infeed conveyor or the outfeed conveyor is designed as planar motor, the proposed pick and place system can be used in a variety of different applications, which enhances the flexibility of said pick and place system.

In an advantageous embodiment, the outfeed planar motor is designed to synchronize the movement of the shuttle of the outfeed planar motor in the transfer zone to the infeed movement trajectory of the at least one product in the transfer zone when the pick and place system is used for a given synchronizing time before the manipulator picks the at least one product off the infeed conveyor. Alternatively, the infeed planar motor is designed to synchronize the movement of the shuttle of the infeed planar motor in the transfer zone to the outfeed movement trajectory of the at least one product in the transfer zone when the pick and place system is used for a given synchronizing time before the manipulator picks the at least one product off the shuttle of the infeed planar motor. In this way, the pick and place distance for the manipulator can be minimized ahead, since the movements of the respective shuttle and the respective movement trajectory are already synchronized before the manipulator begins to transfer the at least one product.

Preferably the outfeed planar motor is designed to synchronize the movement of the shuttle of the outfeed planar motor in the transfer zone to the movement of the manipulator in the transfer zone at least for a given transfer synchronizing time during the transfer time after the manipulator has picked off the at least one product when the pick and place system is used. Alternatively, the infeed planar motor is designed to synchronize the movement of the shuttle of the infeed planar motor in the transfer zone to the movement of the manipulator in the transfer zone at least for a given transfer synchronizing time during the transfer time after the manipulator has picked off the at least one product when the pick and place system is used. Since relative movement of the respective shuttle and the manipulator during the transfer time has a significant influence on the (ultimately) required pick and place distance, synchronizing the movements of the respective shuttle and the manipulator can help decreases said distance as well as the transfer time.

In yet another embodiment, the pick and place system further comprises a control unit, which is designed to control the movement of the manipulator and/or the movement of the shuttle of the infeed planar motor and/or the movement of the shuttle of the outfeed planar motor in the transfer zone.

The invention further proposes a method, wherein the outfeed conveyor is designed as planar motor and the at least one product is conveyed on the infeed conveyor into the transfer zone with a given infeed movement trajectory, wherein the shuttle of the outfeed planar motor is moved in the transfer zone in the region of the at least one product on the infeed conveyor, wherein the movement of the shuttle of the outfeed planar motor in the transfer zone is synchronized to the infeed movement trajectory of the at least one product in the transfer zone at least when the manipulator picks the at least one product off the infeed conveyor. Alternatively, the infeed conveyor is designed as planar motor and the at least one product is conveyed on the shuttle of the infeed planar motor into the transfer zone and the at least one product is conveyed by the outfeed conveyor out of the transfer zone with a given outfeed movement trajectory after being placed onto the outfeed conveyor by the manipulator, wherein the movement of the shuttle of the infeed planar motor in the transfer zone is synchronized to the outfeed movement trajectory of the at least one product in the transfer zone at least when the manipulator picks the at least one product off the shuttle of the infeed planar motor. Due to the movement synchronization of the respective shuttle and the at least one product on the infeed conveyor in the transfer zone, the movement of the manipulator necessary to transfer the product to the outfeed conveyor can be significantly simplified. Furthermore, since the shuttle is moved in the region of the at least one product on the infeed conveyor, the pick and place distance for the manipulator is minimized. As the pick and place distance is reduced, the size of the manipulator can be reduced as well, which enables increasing the operation speed of the pick and place system. The transfer time for the manipulator to transfer the at least one product from the infeed conveyor onto outfeed conveyor is significantly reduced compared to known pick and place systems.

Preferably, the movement of the shuttle of the outfeed planar motor in the transfer zone is synchronized to the infeed movement trajectory of the at least one product in the transfer zone for a given synchronizing time before the manipulator picks the at least one product off the infeed conveyor. Alternatively, the movement of the shuttle of the infeed planar motor in the transfer zone is synchronized to the outfeed movement trajectory of the at least one product in the transfer zone for a given synchronizing time before the manipulator picks the at least one product off the shuttle of the infeed planar motor. Since the movements of the respective shuttle and the respective movement trajectory are already synchronized before the manipulator begins to transfer the at least one product, the required pick and place distance can be minimized ahead.

Advantageously, after the manipulator has picked off the at least one product, during the transfer time the movement of the shuttle of the infeed planar motor or the movement of the shuttle of the outfeed planar motor in the transfer zone is synchronized to the movement of the manipulator in the transfer zone at least for a given transfer synchronizing time. As the relative movement of the respective shuttle and the manipulator during the transfer time has a significant influence on the (ultimately) required pick and place distance, synchronizing the movements of the respective shuttle and the manipulator reduces said distance as well as the transfer time.

In addition, during the transfer synchronizing time the shuttle of the outfeed planar motor is moved towards the manipulator in the transfer zone or during the transfer synchronizing time the shuttle of the infeed planar motor is moved away from the manipulator in the transfer zone. In this way, the pick and place distance is reduced even further, which further decreases the transfer time and in turn increases operation speed of pick and place system.

Preferably, the outfeed conveyor is designed as planar motor and the infeed conveyor is designed as planar motor, wherein an outfeed shuttle bounding shape is defined for the shuttle of the outfeed planar motor, said outfeed shuttle bounding shape encompasses the shuttle of the outfeed planar motor, and an infeed shuttle bounding shape is defined for the shuttle of the infeed planar motor, said infeed shuttle bounding shape encompasses the shuttle of the infeed planar motor and in that during the transfer time a shuttle distance between the outfeed shuttle bounding shape and the infeed shuttle bounding shape is kept between a given minimum pick-and-place distance and a given maximum pick-and-place distance, wherein said shuttle distance is preferably between zero and a largest extension in one direction of the outfeed shuttle bounding shape or the infeed shuttle bounding shape. This ensures, that while the at least one product is transferred, the required pick and place distance is minimized.

Alternatively, the outfeed conveyor is designed as planar motor, wherein an outfeed shuttle bounding shape is defined for the shuttle of the outfeed planar motor, said outfeed shuttle bounding shape encompasses the shuttle of the outfeed planar motor with a pick distance between the outer circumference of the shuttle of the outfeed planar motor and the outfeed shuttle bounding shape so that a product zone is formed between the outer circumference of the shuttle of the outfeed planar motor and the outfeed shuttle bounding shape, wherein said pick distance is preferably maximum a largest extension in one direction of the shuttle of the outfeed planar motor, and in that the movement of the shuttle of the outfeed planar motor and/or the movement of the manipulator is controlled to keep the at least one product in the product zone during the transfer time. This also helps to significantly decrease the required pick and place distance and the transfer time.

In addition, the shuttle of the outfeed planar motor is moved towards the at least one product in the product zone before the manipulator picks the at least one product off the infeed conveyor in said product zone and wherein after the at least one product is picked off the infeed conveyor by the manipulator, the manipulator places the at least one product onto the shuttle of the outfeed planar motor. In that way, the transfer time and the required pick and place distance is even further minimized.

Alternatively, the infeed conveyor is designed as planar motor, wherein an infeed shuttle bounding shape is defined for the shuttle of the infeed planar motor, said infeed shuttle bounding shape encompasses the shuttle of the infeed planar motor with a place distance between the outer circumference of the shuttle of the infeed planar motor and the infeed shuttle bounding shape so that a product zone is formed between the outer circumference of the shuttle of the infeed planar motor and the infeed shuttle bounding shape, wherein said place distance is preferably maximum a largest extension in one direction of the shuttle of the infeed planar motor, and in that the movement of the shuttle of the infeed planar motor and/or the movement of the manipulator is controlled to keep the at least one product in the product zone during the transfer time. Hence, the at least one product is transferred in the product zone, minimizing the required pick and place distance can be ensured.

Preferably, in the transfer zone the movement of the manipulator and/or the movement of the shuttle of the infeed planar motor and/or the movement of the shuttle of the outfeed planar motor is controlled by a control unit of the pick and place system.

### Brief Description of the Drawings

The present invention is described in greater detail in the following with reference to Fig. 1 to 4, which show exemplary, schematic and non-limiting advantageous embodiments of the invention. In the drawings:
Fig. 1 shows the basic components of a pick and place system
Fig. 2 shows a sideview of the pick and place system
Fig. 3 shows an alternative embodiment of a pick and place system
Fig. 4 shows another alternative embodiment of a pick and place system.

### Detailed Description of the Drawings

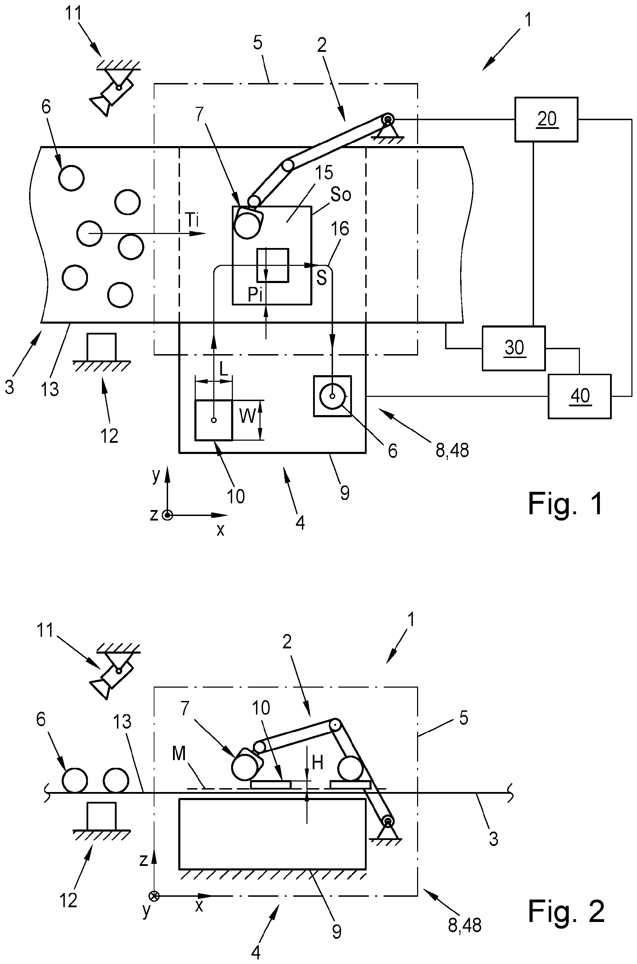

Fig. 1 shows an exemplarily embodiment of a pick and place system 1 according to the invention in a horizontal arrangement viewed from above. The pick and place system 1 comprises a manipulator 2, an infeed conveyor 3 and an outfeed conveyor 4. The pick and place system 1 is used for transferring products 6 from the infeed conveyor 3 to the outfeed conveyor 4. The pick and place system 1 can be used in a variety of different product processing industries, like food and beverage, or in logistics, like in a package logistic centre, etc. Depending on the application of the pick and place system 1, a variety of different or identical types of products 6 can be conveyed and transferred, for example, pieces of food or some kind of packing means like packages or boxes, etc.

When the pick and place system 1 is used, at least one product 6 is arranged on the infeed conveyor 3 and the at least one product 6 is conveyed by the infeed conveyor 3 into a transfer zone 5 of the pick and place system 1. For example, the at least one product 6 can be conveyed directly on the infeed conveyor 3 or the at least one product 6 is conveyed in a given receptacle on the infeed conveyor 3, for example, in some sort of a container or box.

The manipulator 2 is arranged in the pick and place system 1, so that the manipulator 2, at least a gripper 7 of the manipulator, is moveable in the area of the transfer zone 5. In said transfer zone 5 the manipulator 2 transfers the at least one product 6, which is conveyed by the infeed conveyor 3, to the outfeed conveyor 4. Therefore, the transfer zone 5 encompasses at least parts of the infeed conveyor 3 and the outfeed conveyor 4, between which parts the at least one product 6 can be transferred by the manipulator 2. In a possible embodiment, the infeed conveyor 3 and the outfeed conveyor 4 overlap at least in parts (as in Fig. 1). As shown in Fig. 1, the transfer zone 5 preferably encompasses an intersection, where the infeed conveyor 3 and the outfeed conveyer 4 overlap. Of course, the infeed conveyor 3 and the outfeed conveyor 4 can also be arranged in a different way in the transfer zone 5, for example, next to each other or adjoining, and especially also non-overlapping.

The manipulator 2 is moveable in the area of the transfer zone 5, which means that the manipulator 2 is provided to pick the at least one product 6 off the infeed conveyor 3, to move the at least one product 6 to the outfeed conveyor 4 and to place the at least one product 6 onto the outfeed conveyor 4 during a transfer time, when the pick and place system 1 is used. After that, the at least one product 6 is conveyed out of the transfer zone 5 by the outfeed conveyor 4. For example, the at least one product 6 can be conveyed directly on the outfeed conveyor 4 or the at least one product 6 is conveyed in a given receptacle on the outfeed conveyor.

The transfer zone 5 merely serves for describing the invention and is indicated with a dashdotted line in the figures in an exemplary cartesian coordinate system having a x-direction, a y-direction and a z-direction. The transfer zone 5 is basically limited by the possible range of movement of the manipulator 2, especially of the gripper 7 of the manipulator 2.

The manipulator 2 is preferably designed as a single or multiple axis manipulator like a robot, robotic arm, a delta robot, etc. In Fig. 1 the manipulator 2 is exemplary shown as a robotic arm. Furthermore, the manipulator 2 preferably comprises a gripper 7, which is designed to grip the at least one product 6 and to pick off the at least one product 6 from the infeed conveyor 3 in the transfer zone 5. Depending on the type of the at least one product 6, different types and sizes of the manipulator 2 and the gripper 7 can be used. Any device that can hold the product is to be seen as gripper 7 in the sense of the invention. The manipulator 2 preferably comprises a manipulator control unit 20 (e.g., a microcontroller), which controls the movement of the manipulator 2, especially of the gripper 7. The manipulator control unit 20 can also control the actuation of the gripper 7 of the manipulator 2. In Fig. 1 the manipulator control unit 20 is only indicated schematically. In addition, a number of sensors (not shown) can be used for controlling the manipulator 2 and the gripper 7. The movement of the manipulator 2 includes a direction of movement in space (e.g., in x-y-z direction) and a speed in said direction of movement.

The infeed conveyor 3 and the outfeed conveyor 4 can either be designed as a planar motor 8 or as a known industrial conveyor, like an endless conveyor, like a belt conveyor, a roller conveyor, a chain conveyor, etc. Depending on the type of the industrial conveyor, different conveying means 13 can be used on which the at least one product 6 is arranged and by which the at least one product 6 is conveyed. In Fig. 1, the infeed conveyor 3 is designed as a known belt conveyor (not entirely shown in Fig. 1 and Fig. 2), having a belt as the conveying means 13. For example, the at least one product 6 is arranged on the belt of the belt conveyor as the infeed conveyor 3.

The infeed conveyor 3 is configured to convey the at least one product 6 by the conveying means 13 into the transfer zone 5 with a given infeed movement trajectory Ti. The infeed movement trajectory Ti defines a direction of movement (path) and a conveying speed (dynamics) in said direction of movement of the at least one product 6 on the infeed conveyor 3. To convey the at least one product 6 into the transfer zone 5, the conveying means 13 of the industrial conveyor as the infeed conveyor 3 can be actively driven by a drive unit (not shown), for example, an electric motor. The drive unit can be controlled by a conveyor control unit 30 (e.g., a microcontroller). The conveyor control unit 30 may control the conveying speed of the conveying means 13, for example. In Fig. 1 the conveyor control unit 30 is only indicated schematically. Of course, the invention is not limited to actively driven types of industrial conveyors. Also passively driven industrial conveyors can be used, for example, wherein the at least one product 6 is moved by gravity. In Fig. 1, the infeed trajectory Ti exemplarily indicates a movement of the at least one product 6 along a known movement direction of the infeed conveyor 3 into the transfer zone 5 in x-direction with a known conveying speed of the conveying means 13 in said x-direction. The conveying speed of the at least one product 6 is not limited to a constant conveying speed along the movement trajectory. The conveying speed of the at least one product 6 can also be changing along said movement trajectory. For example, in case of a passively driven industrial conveyor, the at least one product 6 can be accelerated or decelerated along the movement trajectory.

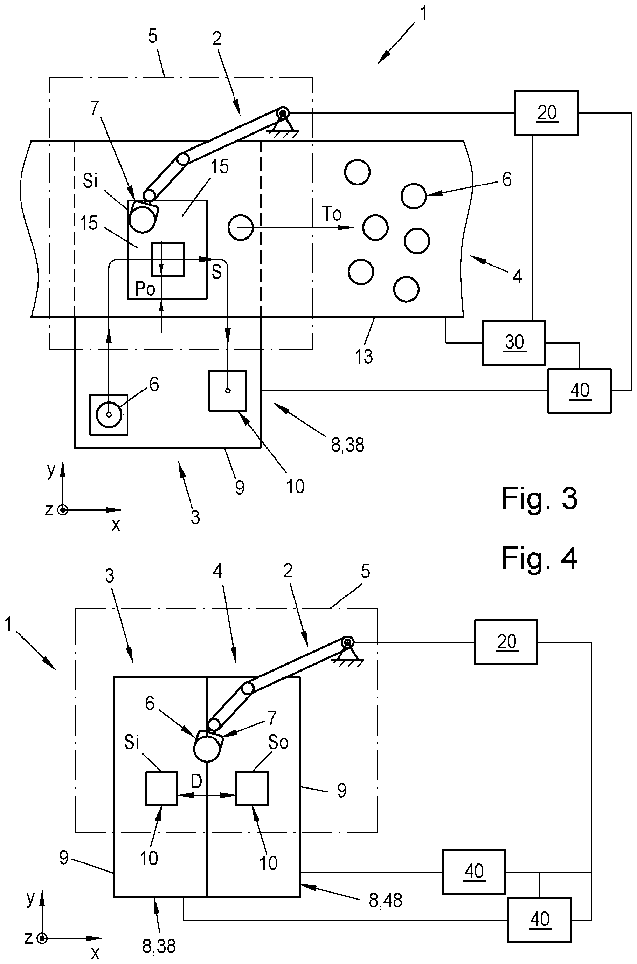

According to the invention, at least the infeed conveyor 3 or the outfeed conveyor 4 is designed as planar motor 8. In the embodiment shown in Fig. 1 and Fig. 2, the outfeed conveyor 4 is configured as planar motor 8 and is therefore described as outfeed planar motor 48. If the infeed conveyor 3 is configured as planar motor 8, it is described in the following as infeed planar motor 38, which will be described in detail in the following with Fig. 3. It is also possible that both the infeed conveyor 3 and the outfeed conveyor 4 are designed as planar motor 8, which will be described in the following with Fig. 4.

As mentioned at the beginning, basically the planar motor 8 comprises a stator 9 and at least one shuttle 10. The stator 9 of the planar motor 8 can comprise a modular structure, in that the stator 9 comprises two or more stator segments. The stator segments can be connected in virtually any pattern necessary for the respective application of the planar motor 8. In the following description of the proposed pick and place system 1, the stator 9 is described as one single structure having, e.g., a rectangular shape. Of course, the stator 9 is not limited to the geometric shape shown in the figures.

In the following only one shuttle 10 per planar motor 8 is described. Of course, the proposed pick and place system 1 can comprise more than one shuttle 10 per planar motor 8 that can be moved simultaneously and independent form each other with the planar motor 8.

The stator 9 of the planar motor 8 defines a movement plane M for the shuttle 10 above an active surface of the stator 9. For example, the movement plane M can expand in the x-y plane, at a certain height in the z-direction above the active surface of the stator 9, as exemplarily indicated in Fig. 2 by a dash dotted line. The term "active surface" describes a surface of the stator 9 above which the shuttle 10 can be moved by electromagnetic forces in a known manner. The at least one shuttle 10 can levitate in the movement plane M above the active surface of the stator 9 and is generally moveable in at least two directions of movement. For example, the shuttle 10 can be moved in the movement plane M in x- and y-direction. The shuttle 10 can also be moved in z-direction by adjusting the height of levitation above the stator 9 by lowering or raising the movement plane M, also for each shuttle independently. Furthermore, the shuttle 10 can rotate about its rotational axes. As mentioned at the beginning, the shuttle 10 can be basically moved above the active surface of the stator 9 in the direction of all six rigid body degrees of freedom. However, for the sake of simplicity, the invention is further explained by two directions of movement of the shuttle 10 in x- and y-direction. Since the function and structure of a planar motor 8 are known, there will be no detailed description of the stator 9 and the shuttle 10 at this point. For controlling the movement of the shuttle 10, especially in the transfer zone 5, the planar motor 8 can comprise a planar motor control unit 40 (e.g., a microcontroller). The conveyor control unit 30 is only indicated schematically in Fig. 1.

However, as mentioned at the beginning, the stator 9 is not restricted to a horizontal arrangement, e.g., in the x-y plane, as shown in the figures. The stator 9 can also be arranged in a vertical arrangement, e.g., to form the movement plane M in the x-z or y-z plane. Furthermore, an overhead arrangement of the stator 9 is also possible, in that the movement plane M in the x-y plane is suspended in negative z-direction from the active surface of the stator 9. For the sake of simplicity, in the following the invention will be described with the horizontal arrangement of the stator 9, wherein the movement plane M is in the x-y plane.

The shuttle 10 of the planar motor 8 can be designed in different shapes, e.g., rectangular, circular, etc. The shuttle 10 can also be designed in different sizes (extensions in x-, y- and z-direction). For example, the size of the shuttle 10 can depend on the size of the at least one product 6 to be conveyed. As shown in the figures, the shuttle 10 has a rectangular (boxy) shape with an extension in x-direction (length L), an extension in y-direction (width W) and an extension in z-direction (height H). Usually, the width Wand the length L of the shuttle is substantially larger than its height H.

Due to the levitation of the shuttle 10 above the active surface of the stator 9 of the planar motor 8, an air gap is present. The conveying means 13 of the industrial conveyor is preferably arranged in the air gap between the levitating shuttle 10 and the active surface of stator 9. Fig. 2 shows a side view of the preferred embodiment of the pick and place system 1, wherein the outfeed conveyor 4 is designed as the planar motor 8 and the infeed conveyor 3 is designed as belt conveyor. The shuttle 10 of the outfeed planar motor 48 is levitating above the stator 9 of the outfeed planar motor 48. As exemplarily shown in Fig. 2, the belt as the conveying means 13 can be at least partially arranged in the air gap between the shuttle 10 and the active surface of the stator 9 of the outfeed planar motor 48. In that way the at least one product 6, which is arranged on the conveying means 13, can be conveyed into the transfer zone 5 and the shuttle 10 can be moved above the conveying means 13 and therefore in the region of the at least one product 6 on the conveying means 13 in the transfer zone 5, when the pick and place system 1 is used. Although in Fig. 2 the outfeed conveyor 4 is designed as planar motor 8, the same arrangement can be achieved with the infeed planar motor 38, as shown in Fig. 3, wherein the outfeed conveyor 4 is designed as belt conveyor and the infeed conveyor 3 is designed as the planar motor 8.

As shown in Fig. 1, when the pick and place system 1 is used, the at least one product 6 is conveyed on the infeed conveyor 3 into the transfer zone 5 with the given infeed movement trajectory Ti and the shuttle 10 of the outfeed planar motor 48 is moved in the transfer zone 5 in the region of the at least one product 6 on the infeed conveyor 3. The infeed movement trajectory Ti is exemplarily indicated in Fig. 1 as a vector. As the shuttle 10 of the outfeed planar motor 48 is moved in the transfer zone 5, the shuttle 10 has a certain direction of movement and speed in said direction of movement, for example in x-y direction, which is indicated in Fig. 1 with a shuttle vector S. The shuttle 10 of the outfeed planar motor 48 can be moved, for example, along a certain conveying path 16 into the transfer zone 5 and out of the transfer zone 5. The conveying path 16 is only exemplary indicated in Fig. 1 in the x-y plane. Since the shuttle 10 of the outfeed planar motor 48 can be moved in the movement plane M in various movement directions, the movement of the shuttle 10 in the transfer zone 5, as well as into or out of the transfer zone 5, can be given essentially without any restrictions.

The outfeed planar motor 48 is designed to synchronize the movement of the shuttle 10 of the outfeed planar motor 48 in the transfer zone 5 to the infeed movement trajectory Ti of the at least one product 6 in the transfer zone 5 at least when the manipulator 2 picks the at least one product 6 off the infeed conveyor 3. Preferably, the outfeed planar motor 48 is designed to synchronize the movement of the shuttle 10 of the outfeed planar motor 48 in the transfer zone 5 to the infeed movement trajectory Ti of the at least one product 6 in the transfer zone 5 for a given synchronizing time, before the manipulator 2 picks the at least one product 6 off the infeed conveyor 3. The synchronizing time can depend on the conveying speed of the conveying means 13. For example, the synchronizing time can be chosen to make sure that the movement of the shuttle 10 and infeed movement trajectory Ti of the at least one product 6 are synchronized, when the at least one product 6 is entering the transfer zone 5.

Furthermore, the outfeed planar motor 48 is preferably designed to synchronize the movement of the shuttle 10 of the outfeed planar motor 48 in the transfer zone 5 to the movement of the manipulator 2 in the transfer zone 5 at least for a given transfer synchronizing time during the transfer time after the manipulator 2 has picked off the at least one product 6, when the pick and place system 1 is used. For example, the transfer synchronizing time can be equal to the transfer time. Therefore, after the manipulator 2 has transferred the at least one product 6 to the shuttle 10 of the outfeed planar motor 48, said shuttle 10 with the at least one product 6 can be moved out of the transfer zone 5 independently of the movement of the manipulator 2.

The term "synchronize" basically means in this context, to control the movement of the shuttle 10 of the outfeed planar motor 48 to achieve a predefined relative movement between said shuttle 10 and the infeed movement trajectory Ti of the at least one product 6 in the transfer zone 5. Preferably, the shuttle 10 of the outfeed planar motor 48 and the at least one product 6 move relative to each other in approximately the same direction and at approximately the same speed in the transfer zone 5. For example, during the synchronizing time, the speed of the shuttle 10 is therefore controlled to be approximately the same as the conveying speed of the at least one product 6 on the infeed conveyor 3. As already mentioned, the invention is not limited to a constant conveying speed of the at least one product 6. The term "approximately the same speed" means that said speeds differ by maximum 30%, preferable 10%, more preferable 5%. Additionally, the direction of movement of the shuttle 10 is controlled in the transfer zone 5 to correspond to the direction of movement of the at least one product 6 on the infeed conveyor 3. For example, as schematically shown in Fig. 1, during the synchronizing time the shuttle vector S is essentially parallel to vector of the infeed movement trajectory Ti. The term "approximately the same direction" means that said directions are within a maximum angle, e.g., 1 to 5°, to each other. More preferably, between the shuttle 10 and the at least one product 6 the relative movement is zero, at least when the manipulator 2 picks the at least one product 6 off the infeed conveyor 3. The term "synchronize" excludes the scenario, wherein both the shuttle 10 and the at least one shuttle 6 are at a standstill.

The at least one product 6 is usually arranged in a random orientation and/or random position on the infeed conveyor 3. To synchronize the movement of the shuttle 10 to the movement of the at least one product 6 in the transfer zone 5, as mentioned, the infeed movement trajectory Ti of the at least one product 6 has to be known by the planar motor control unit 40. Therefore, the pick and place system 1 preferably further comprises a machine vision unit 11 and/or a sensor unit 12, which is arranged along the infeed conveyor 3 and/or in the transfer zone 5 (as exemplarily shown in Fig. 1 and Fig. 2).

The machine vision unit 11 and/or the sensor unit 12 are designed to determine the position of the at least one product 6 on the infeed conveyor 3 and the infeed movement trajectory Ti of the at least one product 6 on the infeed conveyor 3 being conveyed into the transfer zone 5 before the manipulator picks off the at least one product 6 from the infeed conveyor 3, when the pick and place system 1 is used. For example, the machine vision unit 11 comprises an imaging unit (e.g., a digital camera), an evaluation unit (e.g., a processor) and some kind of lighting means. The machine vision unit 11 images the at least one product 6 being conveyed on the infeed conveyor 3, preferably before entering the transfer zone 5, and determines from the taken images the position of the at least one product 6 and especially its infeed movement trajectory Ti. Alternatively or additionally, the sensor unit 12, which comprises a number of sensors (e.g., position sensors), which can be arranged along the infeed conveyor 3 and/or in the transfer zone 5 to determine the infeed movement trajectory Ti of the at least one product 6 on the infeed conveyor 3 being conveyed into the transfer zone 5. Furthermore, the machine vision unit 11 and/or the sensor unit 12 can be designed to determine the orientation of the at least one product 6 on the infeed conveyor 3. To transfer said determined infeed movement trajectory Ti to the manipulator control unit 20 and/or the planar motor control unit 40, the machine vision unit 11 and/or the sensor unit 12 are preferably connected to the manipulator control unit 20 and/or the planar motor control unit 40 via a suitable connection, e.g., wired or wireless (not shown in the figures).

Since the conveyor control unit 30 controls the drive unit of the infeed conveyor 3 to enable a certain conveying speed of the conveying means 13 and since the at least one product 6 is arranged on the conveying means 13, preferably without any slipping, the conveying speed of the at least one product 6 on the infeed conveyor 3 corresponds to the conveying speed of the conveying means 13. Therefore, the conveying speed of at least one product 6 on the infeed conveyor 3 is known and can be transmitted to the planar motor control unit 40, in order to determine the infeed movement trajectory Ti. The communication between the conveyor control unit 30 and the planar motor control unit 40 can be enabled by a suitable connection, e.g., via a wired connection (as indicated in Fig. 1) or via a wireless connection. Furthermore, due to the construction of the infeed conveyor 3 and the conveying means 13, the movement direction of the at least one product 6 is also known. For example, as shown in Fig. 1, the movement direction is along the x-direction.

However, these are just examples on how to determine the infeed movement trajectory Ti and a person skilled in the art could foresee other applicable methods. It highly depends on the circumstances of the application, which method is most practical.

The determined infeed movement trajectory Ti of the at least one product 6 on the infeed conveyor 3 can be used by the planar motor control unit 40 to control the movement of the shuttle 10 of outfeed planar motor 48. Furthermore, by knowing where the at least one product 6 is on the infeed conveyer 3 and how the at least one product 6 is orientated on the infeed conveyer 3, as well as how the at least one product 6 is moved by the infeed conveyor 3 in the transfer zone 5, the shuttle 10 of the outfeed planar motor 48 can be moved above the infeed conveyor 3 (e.g., in the x-y plane) in the region of the at least one product 6 in the transfer zone 5 without colliding with said product 6.

The determined infeed movement trajectory Ti of the at least one product 6 can also be transmitted to the manipulator control unit 20. The manipulator control unit 20 can determine a pick position in the transfer zone 5 based on said known infeed movement trajectory Ti, in which pick position the at least one product 6 is picked off the infeed conveyor 3 by the manipulator 2. The pick position can also be transmitted to the planar motor control unit 40, so that the shuttle 10 of the outfeed planar motor 48 can be moved into the region of the pick position in the transfer zone 5 and preferably be synchronized with the infeed movement trajectory Ti of the at least one product 6. Therefore, the manipulator control unit 20 is connected to the planar motor control unit 40 via a suitable connection, e.g., via a wireless or wired connection (as exemplary shown in Fig. 1). It is also possible, that the manipulator control unit 20 is connected to the conveyor control unit 30, to receive information, e.g., about the conveying speed of the conveying means 13.

Furthermore, the direction of movement and the speed of the shuttle 10 of the outfeed planar motor 48 and the direction of movement and the speed of the manipulator 2 in the transfer zone 5 can be controlled to be synchronized. For example, during the transfer synchronizing time, the shuttle 10 of the outfeed planar motor 48 is moved towards the manipulator 2 in the transfer zone 5 or the shuttle 10 of the outfeed planar motor 48 and the manipulator 2 in the transfer zone 5 are moved towards each other. To synchronize said relative movements, the manipulator control unit 20 can be connected to the planar motor control unit 40, to control the movement of the shuttle 10 of the outfeed planar motor 48 in the transfer zone 5. Therefore, the movement of the manipulator 2 can be defined as "master movement", which in turn defines the movement of the shuttle 10 as "slave movement". For example, the manipulator control unit 20 can determine a place position in the transfer zone 5, wherein the manipulator control unit 20 moves the manipulator 2 with the picked off product 6 to the determined place position. To place the picked off product 6 onto the shuttle 10 of the outfeed planar motor 48, the manipulator control unit 20 controls the movement of the shuttle 10 as well to move to the place position (overrules the planar motor control unit 40). It is also possible, that the movement of the shuttle 10 can be defined as "master movement", which in turn defines the movement of the manipulator 2 as "slave movement". For example, the planar motor control unit 40 defines the place position in the transfer zone 5, wherein the shuttle 10 is moved to said place position. The planar motor control unit 40 can further control the movement of the manipulator 2 (overrules the manipulator control unit 20), in that the manipulator 2 with the picked off product 6 is moved to the place position in order to place the at least one product 6 onto the shuttle 10 of the outfeed planar motor 48.

But these are just examples since depending on the specific application, defining the movement of the manipulator 2 or the movement of the shuttle 10 as the "master movement" can have certain advantages. However, the general aim is to synchronize their movements to enable a predefined relative movement in order to reduce the transfer time, hence the pick and place distance, as much as possible.

In a preferred embodiment, the manipulator control unit 20, the conveyor control unit 30 and the planar motor control unit 40 are implemented in a single control unit of the pick and place system 1 (not shown). This can be advantageous in that all necessary information is gathered in the control unit in order to control the movements of the components of the pick and place system 1 in the transfer zone 5 and during transferring the at least one product 6.

Preferably an outfeed shuttle bounding shape So is defined for the shuttle 10 of the outfeed planar motor 48. The outfeed shuttle bounding shape So encompasses the shuttle 10 of the outfeed planar motor 48 with a pick distance Pi between the outer circumference of the shuttle 10 of the outfeed planar motor 48 and the outfeed shuttle bounding shape So. The pick distance Pi may vary along the circumference of the shuttle 10. As exemplary shown in Fig. 1, the outfeed shuttle bounding shape So has a rectangular shape and is defined in the x-y plane. The pick distance Pi is preferably maximum a largest extension in one direction of the shuttle 10 of the outfeed planar motor 48. For example, the largest extension of the shuttle 10 in Fig. 1 is in x-direction or y-direction. Furthermore, a product zone 15 is formed between the outer circumference of the shuttle 10 of the outfeed planar motor 48 and the outfeed shuttle bounding shape So.

The movement of the shuttle 10 of the outfeed planar motor 48 and/or the movement of the manipulator 2 is preferably controlled to transfer the at least one product 6 to the shuttle 10 within the outfeed shuttle bounding shape So during the transfer time. Furthermore, the shuttle 10 of the outfeed planar motor 48 is preferably moved towards the at least one product 6, which is arranged in the product zone 15, before the manipulator 2 picks the at least one product 6 off the infeed conveyor 3 in said product zone 15. Preferably, when the manipulator 2 has picked off the at least one product 6, e.g., in z direction, at least by the height H of the shuttle 10, the shuttle 10 is moved towards the at least one product 6 picked off by the manipulator 2 or the shuttle 10 and the manipulator 2 with the picked off product 6 are moved towards each other, so that the pick and place distance is minimized. Preferably the manipulator 2 only has to substantially move the product vertically in the z direction, at least by the height H of the shuttle 10, while picking the at least on product 6 off the infeed conveyor 3, wherein the shuttle 10 can be moved underneath the at least product 6 and the manipulator 2 can place the at least one product 6 onto the shuttle 10, substantially without any movement of the manipulator 2 in x and y direction. In this way, the transfer time is significantly decreased, since the required pick and place distance of the manipulator 2 is limited to only moving the at least one product 6 in z-direction. As a result, the operation speed of the pick and place system 1 can also be increased.

As already mentioned, after the at least one product 6 is picked off the infeed conveyor 3 by the manipulator 2, the manipulator 2 places the at least one product 6 onto the shuttle 10 of the outfeed planar motor 48. For example, the at least one product 6 is placed into a receptacle by the manipulator 2, which is arranged on the shuttle 10, e.g., a carton, a box or a case. It is also possible, that more than one product 6 can be placed onto the shuttle 10 of the outfeed planar motor by the manipulator 2. Therefore, the products 6 are picked off the infeed conveyor 3 and placed onto the shuttle 10 one by one by the manipulator 2, wherein the shuttle 10 can be moved to each of the products 6 (as already described) individually to minimize the pick and place distance. Alternatively, the products 6 are picked off the infeed conveyor 3 all at once by the manipulator 2 and placed onto the shuttle 10 by the manipulator 2 at the same time. After the manipulator 2 placed the at least one product 6 onto the shuttle 10, the shuttle 10 can be moved out of the transfer zone 5 (as exemplarily indicated in Fig. 1 along the conveying path 16).

After the basic components of the proposed pick and place system 1 have been outlined in detail with the embodiments shown in Fig. 1 and Fig. 2, in the following alternative embodiments of a pick and place system 1 according to the invention will be described with Fig. 3 and Fig. 4. Basically, the operation of the pick and place system 1 is similar to the already explained arrangement shown in Fig. 1 and Fig. 2.

Fig. 3 shows an alternative embodiment of a pick and place system 1, wherein instead of the outfeed conveyor 4, the infeed conveyor 3 is designed as planar motor 8 and a shuttle 10 of the infeed planar motor 38 is designed to convey the at least one product 6 into the transfer zone 5. Of course, more than one product 6 can be arranged on the shuttle 10 of the infeed planar motor 38 and can be conveyed by said shuttle 10 into the transfer zone 5.

The outfeed conveyor 4 is designed as an industrial conveyor, e.g., as a belt conveyor. As described with Fig. 1, the belt of outfeed conveyor 4 as belt conveyor can also be arranged in the air gap between the shuttle 10 and the active surface of the stator 9 of the infeed planar motor 38. When the pick and place system 1 is used, the at least one product 6 is conveyed by the outfeed conveyor 4 out of the transfer zone 5 with a given outfeed movement trajectory To, after being placed onto the outfeed conveyor 4 by the manipulator 2. The outfeed movement trajectory To defines a direction of movement (path) and a conveying speed (dynamics) of the at least one product 6 on the outfeed conveyor 4 (similar to the already described infeed movement trajectory Ti).

As mentioned with the infeed conveyor 3 in Fig. 1 and Fig. 2, the conveyor control unit 30 can control the drive unit of the outfeed conveyor 4 and therefore the conveying speed of the conveying means 13. Hence, the conveying speed of the at least one product 6 on the outfeed conveyor 4 is known and can be transmitted to the planar motor control unit 40. Similar to the embodiment in Fig. 1, the communication between the conveyor control unit 30 and the planar motor control unit 40 can be enabled by a suitable connection, e.g., via a wired connection (as indicated in Fig. 3) or via a wireless connection. Furthermore, due to the construction of the outfeed conveyor 4 and the conveying means 13, the movement direction of the at least one product 6 can be predetermined. For example, as shown in Fig. 3, the movement direction is along the x-direction. In that way, the outfeed movement trajectory To can be determined, by which the at least one product 6 is moved out of the transfer zone 5 after being placed onto the outfeed conveyor 4. So, compared to Fig. 1 and Fig. 2, in case of this embodiment the machine vision unit 11 and/or the sensor unit 12 may not be needed. Therefore, the machine vision unit 11 and/or the sensor unit 12 are not shown in Fig. 3.

The infeed planar motor 38 is designed to synchronize the movement of the shuttle 10 of the infeed planar motor 38 in the transfer zone 5 to the outfeed movement trajectory To of the at least one product 6 in the transfer zone 5 at least when the manipulator 2 picks the at least one product 6 off the shuttle 10 of the infeed planar motor 38. Furthermore, the infeed planar motor 38 is preferably designed to synchronize the movement of the shuttle 10 of the infeed planar motor 38 in the transfer zone 5 to the outfeed movement trajectory To of the at least one product 6 in the transfer zone 5 for a given synchronizing time, when the pick and place system 1 is used, before the manipulator 2 picks the at least one product 6 off the shuttle 10 of the infeed planar motor 38.

Preferably, the infeed planar motor 38 is designed to synchronize the movement of the shuttle 10 of the infeed planar motor 38 in the transfer zone 5 to the movement of the manipulator 2 in the transfer zone 5 at least for a given transfer synchronizing time during the transfer time after the manipulator 2 has picked off the at least one product 6, when the pick and place system 1 is used. Preferably during the transfer synchronizing time, the shuttle 10 of the infeed planar motor 38 is moved away from the manipulator 2 in the transfer zone 5.

As already described with the outfeed planar motor 48, the term "synchronize" basically means also in context of embodiments with the infeed planar motor 38, to control the movement of the shuttle 10 of the infeed planar motor 38 to achieve a predefined relative movement between said shuttle 10 and the outfeed movement trajectory To of the at least one product 6 in the transfer zone 5. Preferably, the shuttle 10 of the infeed planar motor 48 and the at least one product 6 move relative to each other in approximately the same direction and at approximately the same speed in the transfer zone 5. Furthermore, the manipulator control unit 20 is preferably connected to the planar motor control unit 40 of the infeed planar motor 38 and is designed to control the movement of the manipulator 2 and/or the movement of the shuttle 10 of the infeed planar motor 38 in the transfer zone 5. Preferably, the manipulator control unit 20 defines the movement of the manipulator 2 as the "master movement" in the transfer zone 5. For example, the pick position in the transfer zone 5 is defined by the manipulator control unit 20, wherein the shuttle 10 of the infeed planar motor 38 is moved to the pick position by the manipulator control unit 20. Furthermore, the manipulator control unit 20 can define a place position on the outfeed conveyor 4 in the transfer zone 5, wherein the manipulator unit 20 controls the movement of the shuttle 10 of the infeed conveyor 38, in that the shuttle 10 of the infeed planar motor 38 is moved away from the place position in the transfer zone 5.

Preferably, an infeed shuttle bounding shape Si is defined for the shuttle 10 of the infeed planar motor 38. The infeed shuttle bounding shape Si encompasses the shuttle 10 of the infeed planar motor 38 with a place distance Po between the outer circumference of the shuttle 10 of the infeed planar motor 38 and the infeed shuttle bounding shape Si. As exemplary shown in Fig. 3, the infeed shuttle bounding shape Si has a rectangular shape and is defined in the x-y plane. The place distance Po is preferably maximum a largest extension in one direction of the shuttle 10 of the infeed planar motor 48. For example, the largest extension of the shuttle 10 in Fig. 3 is in x-direction or y-direction. Furthermore, a product zone 15 is formed between the outer circumference of the shuttle 10 of the infeed planar motor 38 and the infeed shuttle bounding shape Si.

The movement of the shuttle 10 of the infeed planar motor 38 and/or the movement of the manipulator 2 is controlled, preferably by the manipulator control unit 20, to keep the at least one product 6 in the product zone 15 during the transfer time. When the at least one product 6 is picked off the shuttle 10 of the infeed planar motor 38 by the manipulator 2, during the transfer time said shuttle 10 is preferably moved away from the at least one product 6 picked off by the manipulator 2 or the shuttle 10 and the manipulator 2 with the picked off product 6 are move away from each other, so that the manipulator can place the product 6 onto the outfeed conveyor 4 in the product zone 15. Preferably, the manipulator 2 only has to substantially move the at least one product 6 a certain amount vertically in the z direction to transfer the at least one product, by picking the product 6 off the shuttle 10, wherein the shuttle 10 of the infeed planar motor 38 is moved away from underneath the picked off product 6 and by placing the at least one product 6 onto the outfeed conveyor 4 in the product zone 15 (substantially no movement in x and y direction). Of course, the shuttle 10 of the infeed planar motor 38 is preferably moved away from underneath the picked off product 6 in the product zone 15, so that the manipulator 2 can place said product 6 onto the outfeed conveyor without colliding with the shuttle 10.

After that, the at least one product 6 on the outfeed conveyor 4 is conveyed out of the transfer zone 5 with said outfeed movement trajectory To. Also, with this alternative embodiment of the proposed pick and place system 1, the transfer time is significantly decreased, since the required pick and place distance of the manipulator 2 is minimized. Therefore, the operation speed of the pick and place system 1 can be increased.

Fig. 4 shows yet another embodiment of a pick and place system 1 according to the invention, wherein both the infeed conveyor 3 and the outfeed conveyor 4 are designed as planar motor 8. As exemplarily shown in Fig. 4, infeed planar motor 38 and the outfeed planar motor 48 adjoin each other in the transfer zone 5.

When the pick and place system 1 is used, the shuttle 10 of the infeed planar motor 38 as the infeed conveyor 3 conveys the at least one product 6 into the transfer zone 5 and the manipulator 2 transfers the at least one product 6 onto the shuttle 10 of the outfeed planar motor 48 as the outfeed conveyor 4. Since both the movement of the shuttle 10 of the infeed planar motor 38 and the movement of the shuttle 10 of the outfeed planar motor 48 can be controlled, preferably by a respective planar motor control unit 40, the movement of the shuttle 10 of the infeed planar motor 38 and the movement of the shuttle 10 of the outfeed planar motor 48 are synchronized at least when the manipulator 2 picks the at least one product 6 off the shuttle 10 of the infeed planar motor 38. Therefore, both planar motor control units 40 can be connected to each other, as exemplarily shown in Fig. 4. In case of this embodiment the machine vision unit 11 and/or the sensor unit 12 may also not be needed. Therefore, the machine vision unit 11 and/or the sensor unit 12 are not shown in Fig. 4.

Preferably, the movement of the shuttle 10 of the infeed planar motor 38 in the transfer zone 5 is synchronized to the movement of the manipulator 2 in the transfer zone 5 for the given synchronizing time before the manipulator 2 picks the at least one product 6 off the shuttle 10 of the infeed planar motor 38. Therefore, the manipulator control unit 20 can be connected to the planar motor control unit 40 of the infeed planar motor 38, to control the movement of the shuttle 10 of the infeed planar motor 38, in that the shuttle 10 is moved to a predefined pick position in the transfer zone 5 by the manipulator control unit 20.

Furthermore, after the manipulator 2 has picked the at least one product 6 off the shuttle 10 of the infeed conveyor 38, during the transfer time the movement of the shuttle 10 of the infeed planar motor 38 and/or the movement of the shuttle 10 of the outfeed planar motor 48 in the transfer zone 5 is synchronized to the movement of the manipulator 2 in the transfer zone 5 at least for the given transfer synchronizing time. During the transfer synchronizing time the shuttle 10 of the outfeed planar motor 48 is moved towards the manipulator 2 in the transfer zone 5 and/or in that during the transfer synchronizing time the shuttle 10 of the infeed planar motor 38 is moved away from the manipulator 2 in the transfer zone 5. Therefore, the manipulator control unit 20 can be connected to the planar motor control unit 40 of the outfeed planar motor 38 as well, to not only control the movement of the shuttle 10 of the infeed planar motor 38, but also the movement of the shuttle 10 of the outfeed planar motor 48.

Preferably during the transfer time, a shuttle distance D between the outfeed shuttle bounding shape So, which preferably corresponds to the circumference of the shuttle 10 of the outfeed planar motor 48, and the infeed shuttle bounding shape Si, which preferably corresponds to the circumference of the shuttle 10 of the infeed planar motor 38, is kept between the given minimum pick-and-place distance and the given maximum pick-and-place distance, wherein said shuttle distance D is preferably between zero and the largest extension in one direction of the outfeed shuttle bounding shape So or the infeed shuttle bounding shape Si.

## Claims

1. Pick and place system (1) for transferring products (6), comprising: a manipulator (2), an infeed conveyor (3) and an outfeed conveyor (4), wherein at least the infeed conveyor (3) or the outfeed conveyor (4) is designed as a planar motor (8) comprising at least one shuttle (10), which at least one shuttle (10) is moveable in a transfer zone (5) of the pick and place system (1),
wherein when the pick and place system (1) is used, at least one product (6) is arranged on the infeed conveyor (3) and the at least one product (6) is conveyed by the infeed conveyor (3) into the transfer zone (5),
wherein the manipulator (2) is moveable in the area of the transfer zone (5) and the manipulator (2) is provided to pick the at least one product (6) off the infeed conveyor (3), to move the at least one product (6) to the outfeed conveyor (4) and to place the at least one product (6) onto the outfeed conveyor (4) during a transfer time when the pick and place system (1) is used,
**characterised in that** the outfeed conveyor (4) is designed as planar motor (8), wherein when the pick and place system (1) is used, the at least one product (6) is conveyed on the infeed conveyor (3) into the transfer zone (5) with a given infeed movement trajectory (Ti) and the shuttle (10) of the outfeed planar motor (48) is moved in the transfer zone (5) in the region of the at least one product (6) on the infeed conveyor (3), wherein the outfeed planar motor (48) is designed to synchronize the movement of the shuttle (10) of the outfeed planar motor (48) in the transfer zone (5) to the infeed movement trajectory (Ti) of the at least one product (6) in the transfer zone (5) at least when the manipulator (2) picks the at least one product (6) off the infeed conveyor (3),
**or in that** the infeed conveyor (3) is designed as planar motor (8) and the shuttle (10) of the infeed planar motor (38) is designed to convey the at least one product (6) into the transfer zone (5), wherein when the pick and place system (1) is used, the at least one product (6) is conveyed by the outfeed conveyor (4) out of the transfer zone (5) with a given outfeed movement trajectory (To) after being placed onto the outfeed conveyor (4) by the manipulator (2), wherein the infeed planar motor (38) is designed to synchronize the movement of the shuttle (10) of the infeed planar motor (38) in the transfer zone (5) to the outfeed movement trajectory (To) of the at least one product (6) in the transfer zone (5) at least when the manipulator (2) picks the at least one product (6) off the shuttle (10) of the infeed planar motor (38).

2. Pick and place system (1) according to claim 1, **characterised in that** the outfeed planar motor (48) is designed to synchronize the movement of the shuttle (10) of the outfeed planar motor (48) in the transfer zone (5) to the infeed movement trajectory (Ti) of the at least one product (6) in the transfer zone (5) for a given synchronizing time, when the pick and place system (1) is used, before the manipulator (2) picks the at least one product (6) off the infeed conveyor (3).

3. Pick and place system (1) according to claim 1, **characterised in that** the infeed planar motor (38) is designed to synchronize the movement of the shuttle (10) of the infeed planar motor (38) in the transfer zone (5) to the outfeed movement trajectory (To) of the at least one product (6) in the transfer zone (5) for a given synchronizing time, when the pick and place system (1) is used, before the manipulator (2) picks the at least one product (6) off the shuttle (10) of the infeed planar motor (38).

4. Pick and place system (1) according to any of the claims 1 to 3, **characterised in that** the outfeed planar motor (48) is designed to synchronize the movement of the shuttle (10) of the outfeed planar motor (48) in the transfer zone (5) to the movement of the manipulator (2) in the transfer zone (5) at least for a given transfer synchronizing time during the transfer time after the manipulator (2) has picked off the at least one product (6) when the pick and place system (1) is used **or in that** the infeed planar motor (38) is designed to synchronize the movement of the shuttle (10) of the infeed planar motor (38) in the transfer zone (5) to the movement of the manipulator (2) in the transfer zone (5) at least for a given transfer synchronizing time during the transfer time after the manipulator (2) has picked off the at least one product (6) when the pick and place system (1) is used.

5. Pick and place system (1) according to any of the claims 1 to 4, **characterised in that** the pick and place system (1) further comprises a control unit, which is designed to control the movement of the manipulator (2) and/or the movement of the shuttle (10) of the infeed planar motor (38) and/or the movement of the shuttle (10) of the outfeed planar motor (48) in the transfer zone (5).

6. Method for operating a pick and place (1) system for transferring products (6) with a manipulator (2) between an infeed conveyor (3) and an outfeed conveyor (4), wherein at least one product (6) is arranged on the infeed conveyor (3) and the at least one product (6) is conveyed by the infeed conveyor (3) into a transfer zone (5) of the pick and place system (1), in which transfer zone (5) during a transfer time the manipulator (2) picks the at least one product (6) off the infeed conveyor (3), moves the at least one product (6) to the outfeed conveyor (4) and places the at least one product (6) onto the outfeed conveyor (4), and wherein the at least one product (6) is conveyed by the outfeed conveyor (4) out of the transfer zone (5),
**characterized in that** the outfeed conveyor (4) is designed as planar motor (8) and the at least one product (6) is conveyed on the infeed conveyor (3) into the transfer zone (5) with a given infeed movement trajectory (Ti), wherein the shuttle (10) of the outfeed planar motor (48) is moved in the transfer zone (5) in the region of the at least one product (6) on the infeed conveyor (3), wherein the movement of the shuttle (10) of the outfeed planar motor (48) in the transfer zone (5) is synchronized to the infeed movement trajectory (Ti) of the at least one product (6) in the transfer zone (5) at least when the manipulator (2) picks the at least one product (6) off the infeed conveyor (3),
**or in that** the infeed conveyor (3) is designed as planar motor (8) and the at least one product (6) is conveyed on the shuttle (10) of the infeed planar motor (38) into the transfer zone (5) and the at least one product (6) is conveyed by the outfeed conveyor (4) out of the transfer zone (5) with a given outfeed movement trajectory (To) after being placed onto the outfeed conveyor (4) by the manipulator (2), wherein the movement of the shuttle (10) of the infeed planar motor (38) in the transfer zone (5) is synchronized to the outfeed movement trajectory (To) of the at least one product (6) in the transfer zone (5) at least when the manipulator (2) picks the at least one product (6) off the shuttle (10) of the infeed planar motor (38).

7. Method according to claim 6, **characterised in that** the movement of the shuttle (10) of the outfeed planar motor (48) in the transfer zone (5) is synchronized to the infeed movement trajectory (Ti) of the at least one product (6) in the transfer zone (5) for a given synchronizing time before the manipulator (2) picks the at least one product (6) off the infeed conveyor (3).

8. Method according to claim 6, **characterised in that** the movement of the shuttle (10) of the infeed planar motor (38) in the transfer zone (5) is synchronized to the outfeed movement trajectory (To) of the at least one product (6) in the transfer zone (5) for a given synchronizing time before the manipulator (2) picks the at least one product (6) off the shuttle (10) of the infeed planar motor (38).

9. Method according to any of the claims 6 to 8, **characterised in that** after the manipulator (2) has picked off the at least one product (6), during the transfer time the movement of the shuttle (10) of the infeed planar motor (38) or the movement of the shuttle (10) of the outfeed planar motor (48) in the transfer zone (5) is synchronized to the movement of the manipulator (2) in the transfer zone (5) at least for a given transfer synchronizing time.

10. Method according to claim 9, **characterised in that** during the transfer synchronizing time the shuttle (10) of the outfeed planar motor (48) is moved towards the manipulator (2) in the transfer zone (5) **or in that** during the transfer synchronizing time the shuttle (10) of the infeed planar motor (38) is moved away from the manipulator (2) in the transfer zone (5).

11. Method according to any of the claims 6 to 10, **characterised in that** the outfeed conveyor (4) is designed as planar motor (8) and the infeed conveyor (3) is designed as planar motor (8), **in that** an outfeed shuttle bounding shape (So) is defined for the shuttle (10) of the outfeed planar motor (48), said outfeed shuttle bounding shape (So) encompasses the shuttle (10) of the outfeed planar motor (48), and an infeed shuttle bounding shape (Si) is defined for the shuttle (10) of the infeed planar motor (38), said infeed shuttle bounding shape (Si) encompasses the shuttle (10) of the infeed planar motor (38) **and in that** during the transfer time a shuttle distance (D) between the outfeed shuttle bounding shape (So) and the infeed shuttle bounding shape (Si) is kept between a given minimum pick-and-place distance and a given maximum pick-and-place distance, wherein said shuttle distance (D) is preferably between zero and a largest extension in one direction of the outfeed shuttle bounding shape (So) or the infeed shuttle bounding shape (Si).

12. Method according to any of the claims 6 to 10, **characterised in that** the outfeed conveyor (4) is designed as planar motor (8), **in that** an outfeed shuttle bounding shape (So) is defined for the shuttle (10) of the outfeed planar motor (48), said outfeed shuttle bounding shape (So) encompasses the shuttle (10) of the outfeed planar motor (48) with a pick distance (Pi) between the outer circumference of the shuttle (10) of the outfeed planar motor (48) and the outfeed shuttle bounding shape (So) so that a product zone (15) is formed between the outer circumference of the shuttle (10) of the outfeed planar motor (48) and the outfeed shuttle bounding shape (So), wherein said pick distance (Pi) is preferably maximum a largest extension in one direction of the shuttle (10) of the outfeed planar motor (48), **and in that** the movement of the shuttle (10) of the outfeed planar motor (48) and/or the movement of the manipulator (2) is controlled to transfer the at least one product (6) to the shuttle 10 within the outfeed shuttle bounding shape So during the transfer time.

13. Method according to claim 12, **characterised in that** the shuttle (10) of the outfeed planar motor (48) is moved towards the at least one product (6) in the product zone (15) before the manipulator (2) picks the at least one product (6) off the infeed conveyor (3) in said product zone (15) and wherein after the at least one product (6) is picked off the infeed conveyor (3) by the manipulator (2), the manipulator (2) places the at least one product (6) onto the shuttle (10) of the outfeed planar motor (48).

14. Method according to any of the claims 6 to 10, **characterised in that** the infeed conveyor (3) is designed as planar motor (8), **in that** an infeed shuttle bounding shape (Si) is defined for the shuttle (10) of the infeed planar motor (38), said infeed shuttle bounding shape (Si) encompasses the shuttle (10) of the infeed planar motor (38) with a place distance (Po) between the outer circumference of the shuttle (10) of the infeed planar motor (38) and the infeed shuttle bounding shape (Si) so that a product zone (15) is formed between the outer circumference of the shuttle (10) of the infeed planar motor (38) and the infeed shuttle bounding shape (Si), wherein said place distance (Po) is preferably maximum a largest extension in one direction of the shuttle (10) of the infeed planar motor (48), **and in that** the movement of the shuttle (10) of the infeed planar motor (38) and/or the movement of the manipulator (2) is controlled to keep the at least one product (6) in the product zone (15) during the transfer time.

15. Method according to any of the claims 6 to 13, **characterised in that** in the transfer zone (5) the movement of the manipulator (2) and/or the movement of the shuttle (10) of the infeed planar motor (38) and/or the movement of the shuttle (10) of the outfeed planar motor (48) is controlled by a control unit of the pick and place system (1).
